**Europäisches Patentamt**

**European Patent Office**

**Office européen des brevets**

(19)

(11) Publication number : **0 054 424 B2**

(12) # NEW EUROPEAN PATENT SPECIFICATION

(45) Date of publication of the new patent specification : **27.07.94 Bulletin 94/30**

(51) Int. Cl.⁵ : **C08L 23/08, C08K 3/22**

(21) Application number : **81305857.5**

(22) Date of filing : **14.12.81**

(54) **Thermoplastic polymer composition, products formed therefrom.**

(30) Priority : **16.12.80 DE 3047269**

(43) Date of publication of application :
**23.06.82 Bulletin 82/25**

(45) Publication of the grant of the patent :
**29.10.86 Bulletin 86/44**

(45) Mention of the opposition decision :
**27.07.94 Bulletin 94/30**

(84) Designated Contracting States :
**AT BE CH FR GB IT LI LU NL SE**

(56) References cited :
**EP-A- 0 004 017**
**DE-A- 2 263 361**
**DE-A- 2 801 542**
**DE-B- 2 262 126**
**FR-A- 2 394 574**
**GB-A- 1 527 668**
**US-A- 3 832 326**
**Elektrizitätswirtschaft, Nr. 3, Jahrgang 80, 02/1981, p. 97**
**Derwent Abstract 56964X/30 (JP-A-141830/74) 11.06.76**

(73) Proprietor : **LINDSAY & WILLIAMS LIMITED**
**Columbine Street**
**Manchester M11 2LH (GB)**

(72) Inventor : **Ivanfy, Bartholomeus, Dipl.-Ing.**
**Strippchenshof 24**
**D-4330 Mülheim-Ruhr (DE)**
Inventor : **Mayer, Hans-Anton, Dipl.-Ing.**
**Saarnerstrasse 50**
**D-4330 Mülheim-Ruhr (DE)**
Inventor : **Parmar, Daljit, Dipl.-Ing.**
**Vier-Eichenhohe 10**
**D-4300 Essen (DE)**

(74) Representative : **Atkinson, Peter Birch et al**
**MARKS & CLERK,**
**Suite 301,**
**Sunlight House,**
**Quay Street**
**Manchester M3 3JY (GB)**

EP 0 054 424 B2

## Description

THERMOPLASTIC POLYMER COMPOSITION AND PRODUCTS FORMED THEREFROM

The invention relates to a fire resistant, non-halogenated flexible thermoplastic polymer composition and products formed therefrom.

For many applications, in particular, for cable sheathing, synthetic materials are required which are non-combustible or not easily inflammable and which have good mechanical strength. Since synthetic materials containing halogens cause secondary damage when burning due to the development of harmful gases, for example corrosive hydrochloric acid gas, combustible cross-linked polyethylene mixed with inorganic additives giving fire-resistance has been used. However, the manufacturing costs are relatively high in comparison with PVC for example, since adequate mechanical strength could only be achieved by cross-linking. In addition, polyethylene is only receptive to fillers in a known degree, since with an excessively high filler content the mixtures become stiff, have inadequate mechanical cohesion and are difficult to process. The composition known from German Offenlegungsschrift 25 54 802, contains 179-277% by weight filler but does not have to satisfy high requirements as regards mechanical strength and would not be suitable for example for cable sheathing or cable insulations.

US-A-3 832 326 describes a flame retardant composition which comprises a cross-linkable polymeric component containing at least 66% by weight of an ethylene vinyl acetate copolymer, a vinyl alkoxy silane, and 80 to 400 parts (per 100 parts of the polymeric component) of hydrated aluminium oxide containing chemically bound water. The vinyl siloxane is present in an amount of 0.5 to 5 parts per 100 parts of hydrated aluminium oxide.

The preferred ethylene vinyl acetate for use in the composition described in US-A-3 832 326 contains at least 9% by weight vinyl acetate (balance ethylene). The preferred maximum vinyl acetate content is indicated to be 40% by weight with a more preferred maximum of 28% by weight since above this level the tensile and ultimate elongation are said to suffer. Additionally properties such as tensile strength and percent retention of elongation after ageing are undesirably lowered if the silane is omitted.

The composition described in US-A- 3 832 326 generally also includes a cross-linking agent since it is in the cross-linked form that the product is most preferably used.

It is an object of the invention to provide an economical polymer composition, which on the one hand is fire-resistant despite the absence of halogens and on the other hand has mechanical strength and can be processed satisfactorily.

According to the present invention there is provided a fire-retardant, non-halogenated thermoplastic composition with sufficient mechanical strength for the sheathing or insulation of cables, the composition consisting essentially of a polymer mixture of ethylene copolymers and a metal hydroxide filler and optionally further fillers and/or additives characterised in that the polymer mixture comprises at least 50% by weight of an elastomer and 5 to 50% by weight of a plastomer, that the elastomer is an ethylene copolymer with at least 38% by weight consisting of vinyl acetate comonomer, that the plastomer is an ethylene copolymer with an ethylene portion of at least 70% by weight and a comonomer portion selected from vinyl acetate, ethyl acrylate or butyl acrylate, and that the metal hydroxide filler is used in an amount of 180 to 320 percent by weight of the polymer mixture.

The vinyl acetate comonomer in the elastomer is economical and produces a composition which can be processed particularly well.

Preferably also the elastomer component amounts to 60-80% of the weight of the polymer mixture. Such amounts of elastomer produce a high-strength composition which can be extruded without plasticiser.

The composition of the invention is particularly useful as sheathing or insulation for cable, (for example an electrical or communication cable). The material is preferably unfoamed in order to achieve the desired high mechanical properties.

The polymer composition of the invention may be processed by an extruder characterised by having a screw with the following features:

- feed zone having a progressive core with a length of 7-17D, preferably 10-15D (D equals diameter of the screw), with a channel depth of 0.08-0.19D for D 90mm or 0.01D to 0.24D for D 90mm with a compression of 1:1.05 to 1:1.7, preferably 1:1.2 to 1:1.5,
- a low-compression metering zone with a length of 4-13D, preferably 5-8D, with a channel depth of 0.08-0.18 for D < 90 mm or 0.1D-0.22D for D>90 mm with a compression of 1:1 to 1:1.2, preferably 1:1.

This extruder is particularly advantageous for processing the compositions according to the invention.

The thermoplastic or thermoelastic polymer composition according to the invention can be produced economically, since no cross-linking is necessary and the proportion of economical fillers is high. Nevertheless surprisingly high tensile strengths and compression strengths occur, which can even be higher than with PVC. The high degree of filling with metal hydroxides, such as aluminium hydroxide in particular, provides extraordinarily good fire-resistance (oxygen index). When used for cables, in the case of fire, an ash structure remains, which guarantees that the electrical insulating property is maintained. At a temperature of 850°C, emergency operating characteristics last for a period of at least twenty minutes, as was previously possible solely when using cross-linked synthetic materials.

The plastomer constituent of the composition according to the invention increases the mechanical strength on account of the high proportion of ethylene comonomer. . The high degree of filling with metal hydroxide is possible with the addition according to the invention of the plastomer component, which is either ethylene vinyl acetate (EVA), or more preferably ethylene ethyl acrylate (EEA) or ethylene butyl acrylate (EBA) or a mixture thereof, in which case astonishingly high strength factors are achieved without cross-linking and despite an extremely high degree of filling with metal hydroxide.

The processing of the composition in mixers and extruders is very good despite the high degree of filling and without the use of plasticisers which are themselves normally flammable.

On account of the plastomer component, the temperatures during processing of compositions according to the invention, for example in a plunger kneading machine, must be greater than 100°C, but if possible greater than 120°C. However, since polar mixtures of this type tend to stick to metals the wall of the kneading machine must be cool during processing. In this case temperatures of less than 50°C are desirable and a temperature of 80°C should not be exceeded. If a parting compound is used, it should preferably be one of a fire-resistant grade.

When processing compositions according to the invention in an extruder, for example for the manufacture of cable sheathing, a particularly high throughput of material can be achieved without problems if the extruder screw is constructed as described above. In this case it has been found that only two functional zones are necessary, namely a feed zone and a metering zone. Experiments with screws of different dimensions produced the result that, with the parameters indicated for the extruder screw in which a low compression or even compression-free metering zone is important, high manufacturing speeds are possible with a relatively low drive power.

The advantageous properties of some compositions according to the invention are illustrated in the following non-limiting examples: The compositions of Examples 1 and 2 are particularly suitable for cable sheathing and that of Example 3 for the core insulation of a cable. In the Examples EVA stands for ethylene vinyl acetate and VA for vinyl acetate.

Example 1

| | |
|---|---|
| EVA-elastomer (40% VA) | 65 parts |
| EVA-plastomer (9% VA) | 35 parts |
| Aluminium hydroxide | 200 parts |
| Anox HB, age resistor | 1 part |
| Carbon black F.E.F. | 2.5 parts |

Tensile strength : 8 N/mm$^2$
Breaking elongation : 150%
Oxygen index greater than 45.

Example 2

```
EVA-elastomer (45% VA) ..............  60 parts
EVA-plastomer (max 20% VA) ..........  40 parts
Parting compound ...................   5 parts
Aluminium hydroxide ................ 150 parts
Magnesium compound
(magnesium carbonate and/or
magnesium hydroxide) ...............  50 parts
Flectol H age resister ............   1 part
TiO₂ ...............................   1 part
```

Tensile strength : 7.5-9N/mm$^2$
Breaking elongation : 140-190%
Oxygen index approximately : 45-50

Example 3

```
EVA-elastomer (40% VA) ..............  60 parts
EVA-plastomer (max 20% VA) ..........  40 parts
Aluminium hydroxide (low in
                      electrolyte) ... 200 parts
Age resister Vulkanox HS ...........   1 part
PCD (Polycarbodiimide) .............   2 parts
Pigment ............................   1 part
```

Tensile strength : 7-8 N/mm$^2$
Breaking elongation : 150-180%
Oxygen index : LO1 $\geq$ 45

Example 4

| | |
|---|---|
| EVA-elastomer (45% VA) | 60 parts |
| EBA-copolymer (17% BA) | 40 parts |
| Aluminium Hydroxide | 150 parts |
| Magnesium Hydroxide | 50 parts |
| Parting Compound | 5 parts |
| ANOX HB, (Age Resister) | 1 part |
| TiO₂ | 1 part |

Tensile Strength : 8-9N/mm$^2$
Breaking Elongation : 200% approx
Oxygen Index : > 45

Example 5

| | |
|---|---|
| EVA-elastomer (45% VA) | 60 parts |
| EEA-copolymer (19%EA) | 40 parts |
| Aluminium Hydroxide | 260 parts |
| Flectol H Age Resister | 1 part |

| Carbon Black FEF | 2 parts |
| Parting Compound | 5 parts |

Tensile strength : 8-9 N/mm$^2$

Breaking elongation : 180-200%

Oxygen Index : 50 approx

In these mixtures, aluminium hydroxide with a specific surface of the particles of more than 6 m$^2$/gram was chosen. Particularly advantageous results for the oxygen index and strength occurred with specific surfaces of more than 10m$^2$/gram. Good results were also obtained when using magnesium hydroxide with a particle size of preponderantly < 44 μm.

Naturally, additional fillers such as for example kaolin, talcum, metal carbonates such as chalk and magnesium carbonate can also be added to the mixtures according to the invention. Also other additives such as additional polymers, age resisters and auxiliary processing means can be added. The polymer mixtures according to the invention also have outstanding mechanical strength factors, even without cross-linking and withstand the strictest fire tests.

Although not in accordance with the invention, increasing the strength still further by cross-linking using peroxide or by irradiation with high energy rays, is conceivable in special cases. Mixtures according to the invention have good electrical properties (for use as insulating mixtures) and therefore can also be used for high quality electrical cables such as communications cables, coaxial cables or high voltage cables. The compositions according to the invention are very suitable for jacketing or sheathing of cables with high quality thermoplastic insulations, such as energy cables, high frequency cables and telecommunication cables etc., and also those with insulations with air spaces (like PE-CELL and PE-DISC). In this case there is no danger of the core insulations deforming or melting, because the long residence time necessary in the case of CV-vulcanization, at high pressure and high temperature, is dispensed with. Naturally, the use of compositions according to the invention is not restricted to electrical cables, but can be used where ever economical, fire-resistant materials, which are mechanically strong without cross-linking, are required. Processing to form elongated, flat products such as sheets, tapes, foils and sectional members is quite possible. One such example of a flat product is one for use as a floor covering, e.g. a tile.

## Claims

1. A fire-retardant, non-halogenated thermoplastic composition with sufficient mechanical strength for the sheathing or insulation of cables, the composition consisting essentially of a polymer mixture of ethylene copolymers and a metal hydroxide filler and optionally further fillers and/or additives characterised in that the polymer mixture comprises at least 50% by weight of an elastomer and 5 to 50% by weight of a plastomer, that the elastomer is an ethylene copolymer with at least 38% by weight consisting of vinyl acetate comonomer, that the plastomer is an ethylene copolymer with an ethylene portion of at least 70% by weight and a comonomer portion selected from vinyl acetate, ethyl acrylate or butyl acrylate, and that the metal hydroxide filler is used in an amount of 180 to 320 percent by weight of the polymer mixture.

2. Polymer composition according to claim 1, characterised in that, in order to achieve a high-strength mixture which can also be extruded without plasticizer, the elastomer component amounts to 60-80% of the weight of the polymer mixture.

3. A cable having sheathing or insulation which comprises the composition of claim 1 or 2.

4. An elongate product or a flat product formed from the composition as claimed in claim 1 or 2.

5. A product as claimed in claim 4 which is a sectional member.

6. A product as claimed in claim 4 which is a floor covering.

7. A product as claimed in claim 6 which is a tile.

## Patentansprüche

1. Feuerbeständige, nichthalogenierte thermoplastische Zusammensetzung mit ausreichender mechanischer Festigkeit zum Ummanteln oder Isolieren von Kabeln, wobei die Zusammensetzung im wesentlichen aus einem Polymergemisch von Ethylen-Copolymeren und einem Metallhydroxid-Füllstoff und gegebenenfalls weiterer Füllstoffen und/oder Zusätzen besteht, dadurch gekennzeichnet, daß das Polymergemisch mindestens 50 Gew.-% eines Elastomers und 5-50 Gew.-% eines Plastomers aufweist, daß das Elastomer ein Ethylen-Copolymer ist, wobei mindestens 38 Gew.-% aus Vinylacetat-Comonomer bestehen, daß das Plastomer ein Ethylen-Copolymer mit einem Ethylenanteil von mindestens 70 Gew.-% und einem Comonomeranteil ist, der aus Vinylacetat, Ethylacrylat oder Butylacrylat ausgewählt ist, und daß der Metallhydroxid-Füllstoff in einer Menge von 180-320 Gew.-% des Polymergemischs verwendet wird.

2. Polymerzusammensetzung nach Anspruch 1, dadurch gekennzeichnet, daß, um ein hochfestes Gemisch zu erhalten, das auch ohne Weichmacher extrudierbar ist, die Elastomerkomponente 60-80 % des Gewichts des Polymergemischs ausmacht.

3. Kabel mit einer Ummantelung oder Isolierung, die die Zusammensetzung von Anspruch 1 oder 2 aufweist.

4. Langgestrecktes Produkt oder Flachprodukt, das aus der Zusammensetzung nach Anspruch 1 oder 2 gebildet ist.

5. Produkt nach Anspruch 4, das ein Profilelement ist.

6. Produkt nach Anspruch 4, das ein Bodenbelag ist.

7. Produkt nach Anspruch 6, das eine Fliese ist.

## Revendications

1. Composition thermoplastique non halogénée, résistante au feu avec une résistance mécanique suffisante pour le gainage ou l'isolation de câbles, la composition étant essentiellement constituée par un mélange de polymère formé de copolymères d'éthylène et d'une charge d'hydroxyde métallique et optionnellement d'autres charges et/ou additifs, caractérisée en ce que le mélange de polymère comprend au moins 50 % en poids d'un élastomère et de 5 à 50 % en poids d'un plastomère, en ce que l'élastomère est un copolymère d'éthylène avec au moins 38 % en poids constitués de comonomère d'acétate de vinyle, en ce que le plastomère est un copolymère d'éthylène avec une proportion d'éthylène d'au moins 70 % en poids et une portion de comonomères sélectionnés parmi de l'acétate de vinyle, de l'acrylate d'éthyle ou de l'acrylate de butyle, et en ce que la charge d'hydroxyde métallique est utilisée dans une proportion de 180 à 230 % en poids du mélange de polymère.

2. Composition de polymères selon la revendication 1, caractérisée en ce que, afin d'obtenir un mélange à résistance élevée qui peut être également extrudé sans plastifiant, la proportion de composant élastomère est de 60 à 80 % en poids du mélange de polymère.

3. Câble ayant un gainage ou une isolation qui comprend la composition selon la revendication 1 ou 2.

4. Produit de forme allongée ou produit plat formés à partir de la composition selon la revendication 1 ou 2.

5. Produit selon la revendication 4 lequel est un profilé.

6. Produit selon la revendication 4 lequel est un revêtement de sol.

7. Produit selon la revendication 4 lequel est une dalle.